# EUROPEAN PATENT SPECIFICATION

(11) **EP 1 339 145 B1**
(45) Date of publication and mention of the grant of the patent: **30.11.2011**
(21) Application number: 00971455.1
(22) Date of filing: 24.10.2000
(51) Int. Cl.: H02B 13/00, H02B 13/045

(54) **CELL UNION ASSEMBLY FOR ELECTRIC SWITCHGEAR**
ZELLENVEREINIGUNGSBAUGRUPPE FÜR ELEKTRISCHE SCHALTEINRICHTUNGEN
ENSEMBLE DE CONNEXION POUR CELLULES D'APPAREILLAGE ELECTRIQUE

(43) Date of publication of application: 27.08.2003
(73) Proprietor: Ormazabal Y Cia., S.L.U., 48140 Igorre (ES)
(72) Inventor: ORMAZABAL OCERIN, Francisco, Javier, E-48140 Igorre (ES)
(74) Representative: Carpintero Lopez, Francisco
(86) International application number: PCT/ES2000/000409
(87) International publication number: WO 2002/035668

(56) References cited:
- EP-A1- 0 674 375
- EP-A1- 0 891 013
- ES-A1- 2 072 177
- ES-A2- 2 037 590
- US-A- 3 713 075

## Description

### OBJECT OF THE INVENTION

The present invention relates to a interconnection assembly for electrical switchgear cells, and more specifically, to a system for coupling electrical switchgear cells or modules able to be used in electrical distribution and transformation centres, employing in the coupling or interconnection between the cells an independent connector element which is housed by plugging in, as an intermediate piece, in a the individual pans provided for this purpose in each one of the cells equipped with the conductor terminals to be joined.

The object of the invention is to provide a coupling system or interconnection assembly between cells which incorporate parts of the operation and protection gear of electrical distribution and transformation stations, with characteristics such that the actual coupling or interconnection is carried out in such a manner that it is managed at all times to maintain the impermeability of the coupling, both mechanically and electrically, thereby preventing that in the interconnection or coupling operation an escape occurs of the protective gas that this type of gear normally incorporates.

### BACKGROUND OF THE INVENTION

European Patent 0821013 refers to a Electrical interconnection device between two high voltage and gas insulation cells that has an insulating sleeve enclosing a contact made up of a rigid central block with ball joints at either end attaching two contact jaws. These jaws being respectively connected with the contacts of each of the cells to be coupled.

However, this device does not permit a radial displacement of said jaws in order to offset possible misalignments between the contacts of the cells. Moreover, this device has not means to impede the extraction of said jaws when an accidental longitudinal displacement occurs.

Also, in European Patent N° 0520933 a description is given of a coupling system for coupling switchgear modules for transformation centres and the like, based on each of the modules or cells having holes into which fit respective pans forming a gastight coupling, with the collaboration of a sealing gasket, each pan coming, in its small or internal base, equipped with a hole in which is fixed a contact terminal.

Moreover, in that European Patent, it is described how with each pair of pans opposite each other and corresponding to two adjacent modules, an insulating mount collaborates, as an intermediate coupling piece, having a shape of a bi-truncated cone and which is materialised by an external insulating mount, on the entire inside of which is to be found a metallic tube which runs the full length longitudinally and inside which are housed a plurality of conductive parts, in the form of fingers, intended for coupling in the appendices that constitute the contact terminals of each cell, said conductive pieces or fingers tending to close over the contact terminals, through the effect of springs or coils on the periphery.

Between the conductive parts and the metallic tube are arranged on the inside of the external insulating mount, a series of elastic bands which permit a certain lateral mobility of those conductive parts, with the aim of taking up possible errors of alignment between the contact terminals, either through off-centring of the pans and even of the cells that are to be coupled.

By employing as a basis the coupling system referred to in that European Patent, a number of improvements and enhancements have been introduced, protection of which is sought by the applicant through the present application.

### DESCRIPTION OF THE INVENTION

The interconnection assembly for electrical switchgear cells which is proposed, includes a first improvement consisting in that the conductive parts are mounted in radial passages designed for this purpose in a conductor ring, the outside diameter of which corresponds with the inside diameter of the actual external and insulating mount, the packet of conductive parts being secured on the inside of the insulating mount by virtue of the contact between the conductive ring mentioned and the mount itself, but with the possibility of tilting with respect to this in order that said packet of conductive parts may be displaced radially to couple over the contact terminals provided on the interior of the pans, even when they are out of alignment.

The conductive parts come with a central recess, determining a length of less width than that of the passage ot the ring in which is housed each conductive part, permitting thereby an radial displacement of the latter on the inside of the ring when the connector assembly is coupled over the corresponding terminal. Said conductive parts are pressed against the ring with the collaboration of some wrap-around springs, preventing in said position any displacement in the longitudinal direction which could permit the extraction of those conductive parts.

Another improvement consists in that the external insulating mount of the connector assembly is formed by an elastic material which possesses a great capacity for deformation permitting it to adapt to the respective pans, though these be offset with regard to their position, so guaranteeing an optimal mechanical seal between the connector and the pans of the cells.

Moreover, it has been foreseen that the inside of the aforesaid elastic mount, is completed with two metallic tubes that are arranged at each of the extremities of the mount in order to provide said mount with a certain stiffness that ensures a good seal against the pans, internal tubes which have a length less than that of the mount in order to leave free the central sector thereof in which is fitted the conductive ring that supports the conductive parts. These metallic and internal stiffening tubes of the elastic mount prevent a possible very high misalignment, between the elastic mount and the pans, from producing an excessive deformation of the mount that would entail an incorrect adjustment on the pertinent pan surface, which would give rise to there being points without contact between the pan and the mount, and thereby a poor sealing action.

Another improvement of the interconnection assembly concerns the cap which is coupled to the pans when there is no requirement or necessity for the electric connection, cap which is provided in order to seal the pan hermetically and electrically isolate the contact situated on the bottom thereof.

The improvement of the cap consists in achieving a good mechanical and electrical seal, for which reason a configuration similar to that of the connector has been foreseen, that is, with an insulating mount of elastic material and an internal metallic socket, this socket establishing the electrical contact and providing a certain stiffness which, combined with the elasticity of the external mount ensure a good seal.

In addition, the aforementioned metallic socket contributes to the creation of an equipotential space on the inside of the cap itself, which prevents partial discharges, in foresight of which on the bottom of the socket there is a hole through which projects a small protuberance of semiconductor material that comes into contact with the terminal of the respective cell, putting the socket and all the air held inside, at the same potential as the connection terminal. This protuberance is provided with a certain flexibility in order to absorb possible variations in the length and ensure thereby good electrical contact.

The cap mentioned is completed with a second metallic socket which, together with the internal socket, constitutes a capacitive divider, so that via a metallic tab of the external socket it is possible to connect a probe to measure the voltage on the bar.

A further improvement consists in that the three pans of a given cell are joined by means of a three-phase metallic plate which acts as a screen, re-conducting the field through the pans and thereby avoiding the concentration thereof on the rims, three-phase plate which is to be found embedded in the pans, being slightly elbowed which redirects the electric field through the inside of the pan.

Said plate makes possible a redistribution of the electric field on the inside of the pan, being joined to the three pans of a cell in the actual process of cell moulding, being secured to the cell by welding over the length of its periphery.

### DESCRIPTION OF THE DRAWINGS

In order to complete the description being made and with the aim of assisting in a better understanding of the characteristics of the invention, according to a preferential example of practical embodiment thereof, a set of drawing is attached thereto as an integral part of said description, in which drawings, by way of illustration and not restrictively, the following is shown:
Figure 1.- Shows a representation according to an exploded perspective view of the assembly that forms the independent connector element each intended to be housed in a corresponding pan, said connector element being provided with the means of coupling or interconnection implemented in accordance with the object of the invention.
Figure 2.- Shows a view in longitudinal cross section of the same assembly of the connector element, as well as a section in side elevation of the two pans to be joined, with their pertinent contact terminals.
Figure 3.- Shows a frontal view of the conductive ring in which are fitted the semiconductor pieces situated coaxially on the inside of the external and elastic mount.
Figure 4.- Shows a view in section of the cap foreseen for mounting on a pan, implemented according to the improvements in the invention.
Figure 5.- Shows a frontal view of the assembly represented in the preceding figure.
Figure 6.- Shows a plan view of the three pans of a single cell joined by means of a three-phase metallic plate.
Figure 7.- Shows a view in transversal section of the three-phase metallic plate of the preceding figure, with the pertinent pan.

### PREFERENTIAL EMBODIMENT OF THE INVENTION

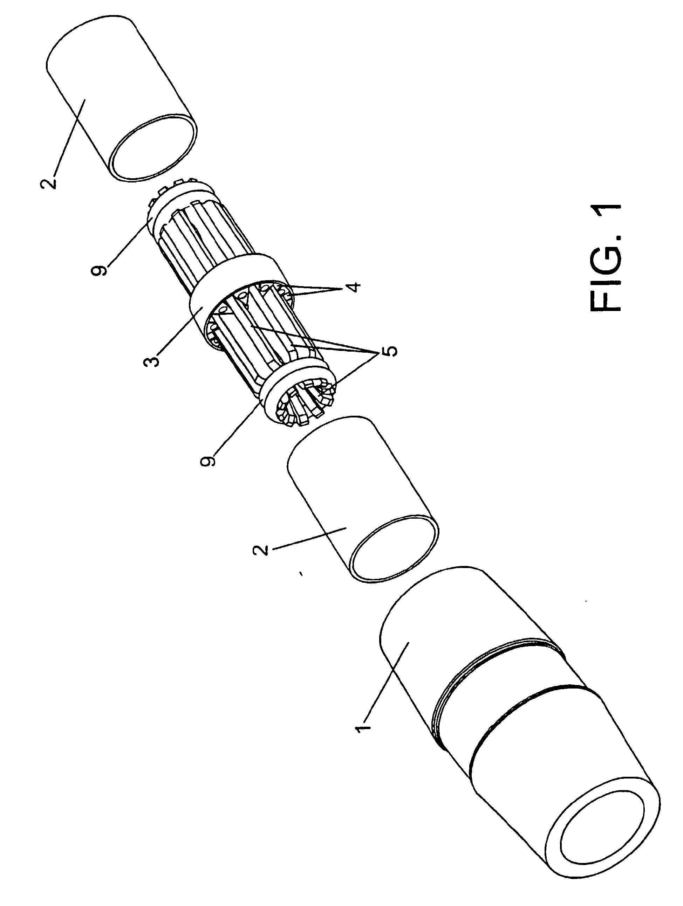

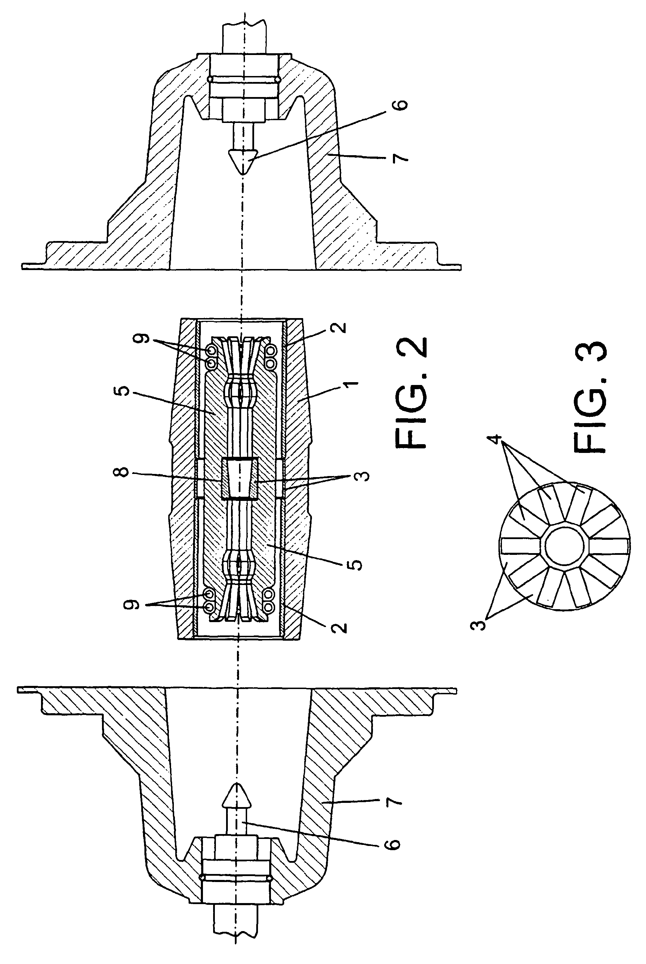

As can be seen from the aforementioned figures, each independent connector element, as is shown in figures 1 and 2, for its coupling to two contiguous pans, comprises an elastic and insulating mount (1) in the shape of a bi-truncated cone, of elastic material, which internally is completed with a pair of metallic tubes (2) the total length of which, summing that of both, is less than that of the mount (1) itself, leaving an intermediate zone for fitting a conductive ring (3) in which are practiced a plurality of radial passages (4), in each one of which is housed a conductive part (5), in the form of a finger, all of the foregoing such that the outside diameter of the mentioned conductive ring (3) is equal to the inside diameter of the elastic mount (1), said ring (3) being snugly fitted on the inside of the mount (1), in its central area and intercalated between the facing ends of the metallic tubes (2) situated on the inside of the mentioned elastic mount (1), whereby the packet formed by the different conductive parts (5) housed and positioned in the passages (4) of the conductive ring (3) is firmly held on the inside of the actual elastic mount (1) by virtue precisely of the contact between the ring (3) and the inside surface of the mount (1), but with the facility for the conductive parts (5) to swivel with respect to the mount (1) in order that the assembly of these may be displaced radially and be coupled on the conductive terminals (6) situated on the inside of the corresponding pans (7), even when these are misaligned.

Those conductive parts (5) are provided with a central recess (8) which determines a loose-fitting housing for each conductive parts (5) in the corresponding passage (4) of the conductive ring (3), and thereby permit the radial displacement of those conductive parts (5) when the connector assembly is coupled on the corresponding terminals and even a tilting thereof when the terminals are found to be misaligned.

When the conductive parts (5) are situated in their correct position, in the ring (3), and the pertinent springs (9) are mounted in an enveloping or perimetral manner on the end parts of those semiconductor pieces (5), these shall be left pressing tightly against the ring (3), and any displacement in the longitudinal direction shall prove impossible, preventing extraction thereof.

With regard to the metallic tubes (2) which the elastic mount (1) incorporates internally, they are foreseen for providing this with a certain stiffness which assures a good seal against the pans (7).

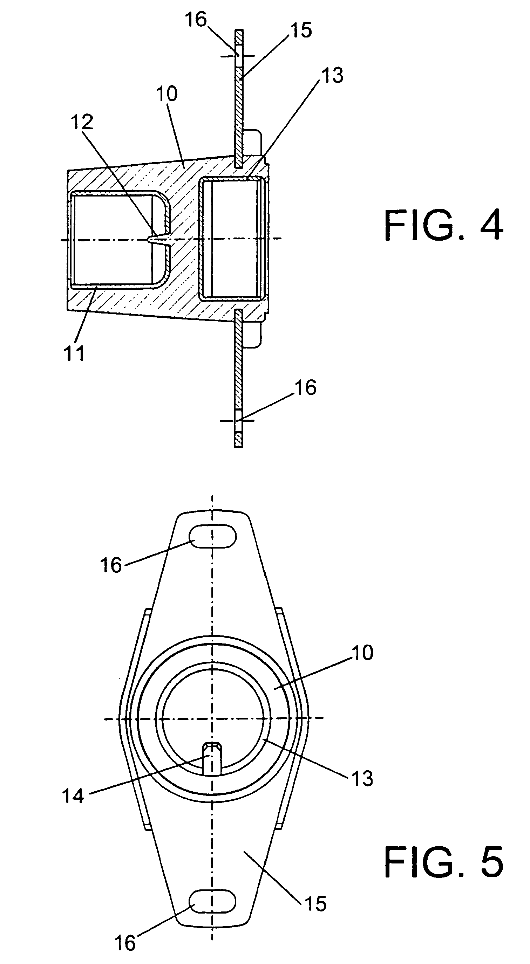

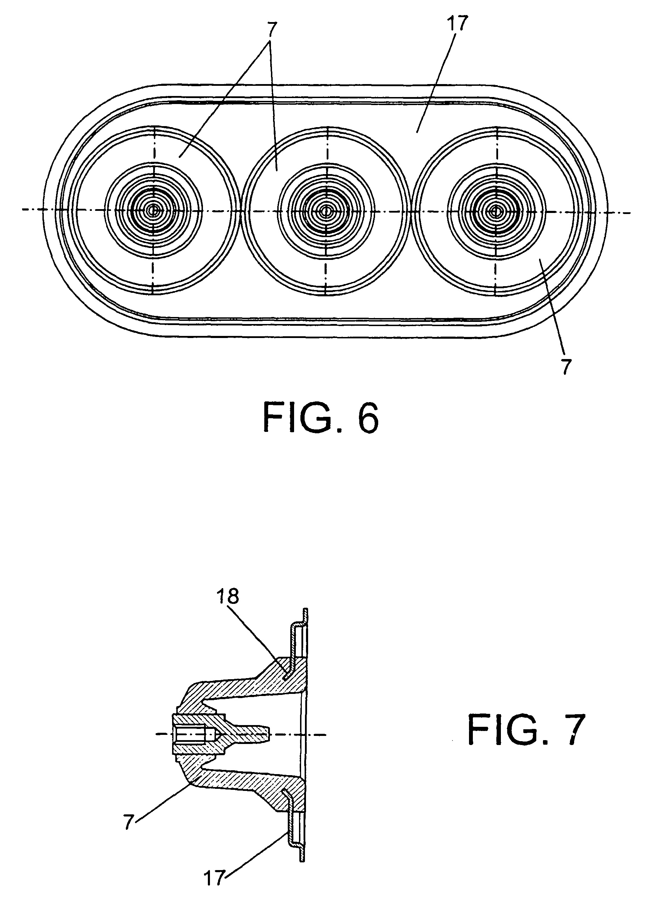

With regard to the cap shown in the figures 5 and 6, provided to fit into the pans (7), when the electrical connection is not necessary, said cap closing the pan hermetically and electrically isolating the contact located on the bottom thereof, it is to be pointed out that to achieve a good mechanical and electrical seal, the aforementioned cap referred to in general with the number (10), has a configuration similar to that of the connector described before, that is, an isolating mount (10), also elastic in nature, and fitted internally with a metallic socket (11) by means of which the contact is established and which also facilitates a certain stiffness which, in combination with the elasticity of the external mount corresponding to the body of the cap (10), assure a good seal.

In the bottom of said socket (11) a hole has been provided through which passes a small protuberance (12), of semiconductor material, which comes into contact with the terminal (6) of the cell, putting the socket (11) and all the air contained inside it at the same potential as the terminal. This protuberance (12) shall be flexible material in order to absorb possible variations in length and assure a good contact with the corresponding terminal.

Furthermore, that cap (10) incorporates, on its external part, a second metallic socket (13) which, together with the socket (11) referred to before, constitutes a capacitive divider, making it possible for, via a metallic tab (14) of that external socket (13), a probe to be connected to measure the voltage on the bar.

The said cap (10) is secured in the cell, in the closed position, by means of a flat metallic plate (15), in which are practiced a pair of oval holes (16) for the passage of screws or other appropriate means of fixation.

With regard to the pans (7) themselves, mounted on the pertinent cell, it has been foreseen that the three pans of a same cell, as is illustrated in figure 6, be linked by means of a three-phase metallic plate (17) which acts as a screen and diminishes the field through the actual pans (7), preventing the concentration of said field on the rims, said three-phase metallic plate (17) being embedded in the pans (7), being joined to these in the actual process of their moulding, being secured to the cell by means of welding around its entire perimeter, said plate (17) also having a slight elbow (18) in its part embedded in the respective pan (7), which redirects the electric field through the interior of the latter.

## Claims

1. Interconnection assembly for electrical switchgear cells, applicable to modular cells which incorporate parts of the operation and protection equipment of electrical distribution and transformation stations, which comprise an independent connector element which is housed in each of the pans (7), previously coupled to the cells, in correspondence with the conductor terminals (6) to be joined, the connector incorporating on its interior a series of conductive parts (5) for the coupling over the cell terminals (6), the actual connector element also having means which permit offsetting of the misalignments between the conductor terminals (6), being completed with a cap (10) attachable to the pans (7) when the electrical connection is not required, the electrical isolation of the terminal situated in the bottom of the pan (7) itself being formed, all of the foregoing in order to achieve a leakproof coupling both mechanically and electrically, and is **characterised in that** the independent connector element comprises:
a) An external mount of elastic material (1);
b) a pair of metallic tubes (2), of total length less than that of the external and elastic mount (1), being arranged internally in said mount (1) and approximately in correspondence with the outermost sectors thereof, so that their movement is impeded due to the geometric interference with a conductive ring (3), in order to leave a central zone of said external and elastic mount (1) free;
c) a bundle of conductive parts (5) mounted axially in respective passages (4) practiced radially in the metallic ring and conductor (3) housed directly in the interior of the elastic mount (1), said conductive ring (3) being in correspondence with the central zone, intercalated between facing ends of the metallic tubes (2), and fitting tightly between the ring (3) and the mount (1), the ends of said conductive parts (5) being pressed by means of elastic elements (9),
it having been foreseen that between the conductive parts (5) and the metallic tubes (2) a sufficient space is determined in order to permit a degree of swivelling of the bundle formed by those conductive parts (5) in order to offset possible misalignments between the terminals (6) to be connected.

2. Interconnection assembly for electrical switchgear cells, in accordance with claim 1, **characterised in that** the conductive parts (5), have practiced therein a central recess (8) determining that in said area of the recess (8) the height is less that that offered by the holes or passages (4) of the conductive ring (3) and, as a consequence, a free space is left between the conductive parts (5) and the internal surface of the tubes (2), which permits a radial displacement of those conductive parts (5) in the interior of the conductive ring (3) when the connector is coupled over the pertinent terminal and even a swivelling of the mentioned conductive parts (5), in the interior of the mount (1), when the terminals are not in alignment.

3. Interconnection assembly for electrical switchgear cells, in accordance with previous claims, **characterised in that** over the outermost sectors of the conductive parts (5) springs (9) are mounted on the periphery which press the bundle of conductive parts (5) against the conductive ring (3)which, together with the recesses in the conductive parts (5) impede the displacement in the longitudinal direction and the corresponding extraction of said conductive parts (5).

4. Interconnection assembly for electrical switchgear cells, in accordance with previous claims, **characterised in that** the cap (10) provided for fitting on the pans (7) when the electrical connection is not necessary, is constituted by an external and insulating support of elastic material (10), with an internal and metallic socket (11) which provides a certain stiffness which assures, in combination with the inherent elasticity of the body of the cap (10) good impermeability; it having been foreseen that said metallic socket (11) contributes to the creation of an equipotential space in the interior of the cap (10), avoiding partial discharges, there being provided for this a hole in the bottom of the ferrule (11) through which passes a small protuberance (12), of flexible, semiconductor material, which comes into contact with the corresponding terminal of the cell, putting the socket (11) and all that contained therein at the same potential as the terminal and assuring a good contact with the corresponding terminal.

5. Interconnection assembly for electrical switchgear cells, in accordance with claim 4, **characterised in that** the cap (10) incorporates, on its external part, a second metallic socket (13) which, together with the internal socket (11), determines a capacitive divider, permitting a probe to be connected to measure the voltage on the bar via a metallic tab (14) corresponding to the external socket (13); with the particularity that said cap (10) is completed with a flat metallic plate (15) with oval holes (16) for securing the same to the pertinent cell, ensuring the sealed position on the latter.

6. Interconnection assembly for electrical switchgear cells, in accordance with previous claims, **characterised in that** the three pans (7) of a same cell are joined by means of a three-phase metallic plate (17), which plate is embedded in the pans (7) themselves, with a slight elbow (18) in order to redirect the electric field through the interior of the actual pan (7), said three-phase metallic plate (17) being joined to the pans (7) at the time when these are in the moulding process.

## Patentansprüche

1. Verbindungsanordnung für elektrische Schaltzellen, die bei modularen Zellen anwendbar ist, die Teile der Betriebs- und Schutzgeräte von elektrischen Verteiler- und Transformationsstationen umfassen, die ein unabhängiges Verbinderelement umfassen, das in jeder der Pfannen (7) aufgenommen ist, die zuvor an die Zellen in Übereinstimmung mit den Leiteranschlüssen (6), die zu verbinden sind, gekoppelt sind, wobei der Verbinder an seiner Innenseite eine Reihe leitender Teile (5) für die Kopplung über die Zellanschlüsse (6) aufweist, wobei das tatsächliche Verbinderelement auch Mittel aufweist, die einen Ausgleich der Fehlausrichtungen zwischen den Leiteranschlüssen (6) ermöglichen, die mit einer Kappe (10) abgeschlossen sind, die an den Pfannen (7) anbringbar ist, wenn die elektrische Verbindung nicht notwendig ist, wobei die elektrische Isolierung des Anschlusses, die sich im Boden der Pfanne (7) befindet, durch diese selbst gebildet ist, all das Vorherige dient dazu, um eine lecksichere Kopplung, sowohl mechanisch wie auch elektrisch zu erreichen, und die **dadurch gekennzeichnet ist, dass** das unabhängige Verbinderelement Folgendes umfasst:
a) eine äußere Fassung aus elastischem Material (1)
b) zwei metallische Röhren (2) mit einer Gesamtlänge von weniger als jener der äußeren und elastischen Fassung (1), die im Inneren der Fassung (1) und annähernd in Übereinstimmung mit deren äußeren Sektoren angeordnet sind, so dass ihre Bewegung aufgrund der geometrischen Überlagerung mit einem leitenden Ring (3) verhindert wird, um eine mittlere Zone der äußeren und elastischen Fassung (1) frei zu lassen;
c) ein Bündel leitender Teile (5), die axial in jeweiligen Durchlässen (4) montiert sind, die radial im metallischen Ring und dem Leiter (3) ausgeführt sind, der direkt im Inneren der elastischen Fassung (1) aufgenommen ist, wobei der leitende Ring (3) mit der mittleren Zone übereinstimmt, zwischen einander zugewandten Enden der metallischen Röhren (2) eingefügt ist und eng zwischen dem Ring (3) und der Fassung (1) sitzt, wobei die Enden der leitenden Teile (5) durch elastische Elemente (9) gepresst werden,
wobei vorgesehen ist, dass zwischen den leitenden Teilen (5) und den metallischen Röhren (2) ein ausreichender Raum festgelegt ist, um einen Schwenkungsgrad des Bündels zu ermöglichen, das durch diese leitenden Teile (5) gebildet wird, um mögliche Fehlausrichtungen zwischen den anzuschließenden Anschlüssen (6) auszugleichen.

2. Verbindungsanordnung für elektrische Schaltzellen nach Anspruch 1, **dadurch gekennzeichnet, dass** in den leitenden Teilen (5) eine mittlere Vertiefung (8) ausgebildet ist, die festlegt, dass in der Fläche der Vertiefung (8) die Höhe geringer ist als jene, die durch die Löcher oder Durchlässe (4) des leitenden Rings (3) geboten werden und infolgedessen ein freier Raum zwischen den leitenden Teilen (5) und der Innenfläche der Röhren (2) verbleibt, der eine radiale Verschiebung dieser leitenden Teile (5) im Inneren des leitenden Rings (3), wenn der Verbinder über den zugehörigen Anschluss gekoppelt wird, und sogar eine Schwenkbewegung der genannten leitenden Teile (5) im Inneren der Fassung (1) ermöglicht, wenn die Anschlüsse nicht ausgerichtet sind.

3. Verbindungsanordnung für elektrische Schaltzellen nach einem der vorangehenden Ansprüche, **dadurch gekennzeichnet, dass** über den äußersten Sektoren der leitenden Teile (5) Federn (9) am Umfang montiert sind, die das Bündel aus leitenden Teilen (5) gegen den leitenden Ring (5) pressen, die gemeinsam mit den Vertiefungen in den leitenden Teilen (5) die Verschiebung in die Längsrichtung und das entsprechende Herausziehen der leitenden Teile (5) verhindern.

4. Verbindungsanordnung für elektrische Schaltzellen nach einem der vorangehenden Ansprüche, **dadurch gekennzeichnet, dass** die Kappe (10), die zum Aufsetzen auf die Pfannen (7) bereitgestellt ist, wenn die elektrische Verbindung nicht notwendig ist, aus einer äußeren und isolierenden Auflage aus elastischem Material (10) besteht, mit einer inneren und metallischen Aufnahme (11), die eine gewisse Steifheit verleiht, die in Kombination mit der inhärenten Elastizität des Körpers der Kappe (10) eine gute Undurchlässigkeit sicherstellt; wobei vorgesehen ist, das die metallische Aufnahme (11) zur Bildung eines äquipotentialen Raumes im Inneren der Kappe (10) beiträgt, wodurch Teilentladungen verhindert werden, wobei dafür eine Öffnung im Boden der Hülse (11) vorgesehen ist, durch welche ein kleiner Vorsprung (12) aus flexiblem Halbleitermaterial geht, der mit dem entsprechenden Anschluss der Zelle in Kontakt gelangt, wodurch die Aufnahme (11) und alles, was darin enthalten ist, auf dasselbe Potential wie der Anschluss gebracht werden und ein guter Kontakt mit dem entsprechenden Anschluss sichergestellt ist.

5. Verbindungsanordnung für elektrische Schaltzellen nach Anspruch 4, **dadurch gekennzeichnet, dass** die Kappe (10) an ihrem Außenteil eine zweite metallische Aufnahme (13) aufweist, die gemeinsam mit der inneren Aufnahme (11) einen kapazitiven Teiler festlegt, der den Anschluss einer Sonde zur Messung der Spannung an der Schiene über eine metallische Lasche (14) ermöglicht, die der äußeren Aufnahme (13) entspricht, mit der Besonderheit, dass die Kappe (10) mit einer flachen metallischen Platte (15) mit ovalen Öffnungen (16) zur Befestigung derselben an der zugehörigen Zelle abgeschlossen ist, wodurch die abgedichtete Position auf der letztgenannten garantiert ist.

6. Verbindungsanordnung für elektrische Schaltzellen nach einem der vorangehenden Ansprüche, **dadurch gekennzeichnet, dass** die drei Pfannen (7) einer selben Zelle durch eine metallische Dreiphasenplatte (17) verbunden sind, wobei die Platte in den Pfannen (7) selbst mit einer leichten Biegung (18) eingebettet ist, um das elektrische Feld durch das Innere der eigentlichen Pfanne (7) umzulenken, wobei die metallische Dreiphasenplatte (17) zu dem Zeitpunkt an den Pfannen (7) befestigt wird, wenn sich diese im Formungsprozess befinden.

## Revendications

1. Ensemble d'interconnexion pour des cellules de dispositif de commutation électrique, applicable à des cellules modulaires qui incorporent des parties de l'équipement fonctionnel et de protection de stations de distribution et de transformation électriques, qui comprennent un élément de connecteur indépendant qui est logé dans chacun des logements (7) précédemment couplés aux cellules, en correspondance avec les bornes de conducteur (6) à assembler, le connecteur incorporant sur son intérieur une série de parties conductrices (5) pour le couplage sur les bornes de cellule (6), l'élément de connecteur réel ayant également des moyens qui permettent le décalage des désalignements entre les bornes de conducteur (6), étant complété par un capuchon (10) pouvant être fixé aux logements (7) lorsque la connexion électrique n'est pas requise, l'isolement électrique de la borne située dans la base du logement (7) lui-même étant formé, tous ceux-ci pour obtenir un couplage étanche aux fuites de façon mécanique et électrique, et est **caractérisé en ce que** l'élément de connecteur indépendant comprend :
a) un montage externe de matériau élastique (1) ;
b) une paire de tubes métalliques (2), de longueur totale inférieure à celle du montage externe et élastique (1), étant agencés de façon interne dans ledit montage (1) et approximativement en correspondance avec les secteurs les plus externes de celui-ci, de sorte que leur mouvement est empêché en raison de l'interférence géométrique avec une bague conductrice (3), afin de laisser une zone centrale dudit montage externe et élastique (1) libre ;
c) un faisceau de parties conductrices (5) montées axialement dans des passages respectifs (4) formés radialement dans la bague métallique et le conducteur (3) logé directement dans l'intérieur du montage élastique (1), ladite bague conductrice (3) étant en correspondance avec la zone centrale, intercalée entre les extrémités opposées des tubes métalliques (2), et s'ajustant étroitement entre la bague (3) et le montage (1), les extrémités desdites parties conductrices (5) étant pressées au moyen d'éléments élastiques (9),
étant attendu qu'entre les parties conductrices (5) et les tubes métalliques (2), un espace suffisant est déterminé afin de permettre un degré de pivotement du faisceau formé par ces parties conductrices (5) afin de décaler des désalignements éventuels entre les bornes (6) à connecter.

2. Ensemble d'interconnexion pour des cellules de dispositif de commutation électrique, selon la revendication 1, **caractérisé en ce que** dans les parties conductrices (5), il est formé un évidement central (8) déterminant que dans ladite zone de l'évidement (8) la hauteur est inférieure à celle offerte par les trous ou passages (4) de la bague conductrice (3) et, en conséquence, un espace libre est laissé entre les parties conductrices (5) et la surface interne des tubes (2), qui permet un déplacement radial des parties conductrices (5) à l'intérieur de la bague conductrice (3) lorsque le connecteur est couplé sur la borne appropriée et même un pivotement des parties conductrices mentionnées (5), à l'intérieur du montage (1), lorsque les bornes ne sont pas alignées.

3. Ensemble d'interconnexion pour des cellules de dispositif de commutation électrique, selon les revendications précédentes, **caractérisé en ce que** sur les secteurs les plus externes des parties conductrices (5), des ressorts (9) sont montés sur la périphérie qui pressent le faisceau de parties conductrices (5) contre la bague conductrice (3) qui, conjointement avec les évidements dans les parties conductrices (5) empêchent le déplacement dans la direction longitudinale et l'extraction correspondante desdites parties conductrices (5).

4. Ensemble d'interconnexion pour des cellules de dispositif de commutation électrique, selon les revendications précédentes, **caractérisé en ce que** le capuchon (10) disposé pour ajustement sur les logements (7) lorsque la connexion électrique n'est pas nécessaire, est constituée par un support externe et isolant de matériau élastique (10), avec un réceptacle interne et métallique (11) qui confère une certaine rigidité qui assure, en combinaison avec l'élasticité inhérente du corps du capuchon (10) une bonne imperméabilité ; étant attendu que ledit réceptacle métallique (11) contribue à la création d'un espace équipotentiel à l'intérieur du capuchon (10), évitant les décharges partielles, étant formé à cet effet un trou à la base de la férule (11) par lequel passe une petite protubérance (12), de matériau semi-conducteur flexible, qui entre en contact avec la borne correspondante de la cellule, mettant le réceptacle (11) et tout ce qu'il contient au même potentiel que la borne et assurant un bon contact avec la borne correspondante.

5. Ensemble d'interconnexion pour des cellules de dispositif de commutation électrique, selon la revendication 4, **caractérisé en ce que** le capuchon (10) incorpore, sur sa partie externe, un deuxième réceptacle métallique (13) qui, conjointement avec le réceptacle interne (11), forme un séparateur capacitif, permettant qu'une sonde soit connectée pour mesure la tension sur la barre via une languette métallique (14) correspondant au réceptacle externe (13) ; avec la particularité que ledit capuchon (10) est complété par une plaque métallique plate (15) avec des trous ovales (16) pour fixer celui-ci à la cellule appropriée, assurant la position scellée sur cette dernière.

6. Ensemble d'interconnexion pour des cellules de dispositif de commutation électrique, selon les revendications précédentes, **caractérisé en ce que** les trois logements (7) d'une même cellule sont assemblés au moyen d'une plaque métallique triphasée (17), ladite plaque étant incorporée dans les logements (7) eux-mêmes, avec un léger codage (18) afin de rediriger le champ électrique à travers l'intérieur du logement réel (7), ladite plaque métallique triphasée (17) étant assemblée aux logements (7) au moment où ceux-ci sont dans le processus de moulage.
